# EUROPÄISCHE PATENTSCHRIFT

(11) **EP 1 181 324 B1**
(45) Veröffentlichungstag und Bekanntmachung des Hinweises auf die Patenterteilung: **12.03.2003**
(21) Anmeldenummer: 00929550.2
(22) Anmeldetag: 23.05.2000
(51) Int. Cl.: C08G 69/00, C08G 69/04, C08G 69/08, C08G 69/16, C08G 69/28

(54) **VERFAHREN ZUR HERSTELLUNG VON POLYAMIDEN**
METHOD FOR THE PRODUCTION OF POLYAMIDES
PROCEDE DE PRODUCTION DE POLYAMIDES

(30) Priorität: 25.05.1999 DE 19923894
(43) Veröffentlichungstag der Anmeldung: 27.02.2002
(73) Patentinhaber: BASF AKTIENGESELLSCHAFT, 67056 Ludwigshafen (DE)
(72) Erfinder: MOHRSCHLADT, Ralf, D-68723 Schwetzingen (DE); HILDEBRANDT, Volker, D-68169 Mannheim (DE); KRAUSS, Dieter, D-67269 Grünstadt (DE); LEEMANN, Martin, D-69124 Heidelberg (DE)
(74) Vertreter: Isenbruck, Günter, Dr.
(86) Internationale Anmeldenummer: EP0004698
(87) Internationale Veröffentlichungsnummer: WO00071599

(56) Entgegenhaltungen:
- EP-A- 0 227 866
- DE-A- 19 631 521
- DE-A- 19 636 766
- DE-A- 19 636 767
- DE-A- 19 709 390
- DE-A- 19 742 221
- US-A- 5 151 543
- US-A- 5 185 427

## Beschreibung

Die Erfindung betrifft ein Verfahren zur Herstellung von Polyarniden aus Hexamethylendiamin. Aminocapronitril und einer Dicarbonsäure.

Die Hydrierung von Adipodinitril in Gegenwart von Katalysatoren ist vielfältig beschrieben. So beschreibt beispielsweise die DE-A-196 31 521 die katalytische Hydrierung von Pentennitril in Gegenwart von Kohlenmonoxid. Die erhaltenen Gemische aus 6-Aminocapronitril und Hexamethylendiamin können nach ihrer Trennung zur Herstellung von Polyamid 6 und Polyamid 66 weiter umgesetzt werden. Beispielsweise ist aus der DE-A-43 19 134 ein Verfahren bekannt, mit dem Aminocapronsäure in Gegenwart von heterogenen Katalysatoren zu Caprolactam umgesetzt werden kann, das wiederum als Monomer zur Herstellung von Polyamid 6 dient. Hexamethylendiamin sowie Adipinsäure sind andererseits Monomerbausteine für Polyamid 66.

Auch die direkte hydrolytische Polymerisation von Aminocapronitril ist möglich. wobei die Umsetzung von Aminocapronitril mit Wasser in Gegenwart von Katalysatoren erfolgen kann, vgl. DE-A-197 09 390.

Nachteilig an den bekannten Verfahren zur Herstellung von Polyamid 6 und Polyamid 66 aus Aminocapronitril bzw. Hexamethylendiamin ist die Tatsache, daß beide Komponenten nach der Hydrierung voneinander getrennt in den jeweiligen Polymerisationen eingesetzt werden müssen. Zudem müssen die Monomere eine hohe Reinheit aufweisen, so daß im allgemeinen eine energie- und kostenaufwendige Auftrennung durchzuführen ist.

Aufgabe der vorliegenden Erfindung ist die Bereitstellung eines Verfahrens zur Herstellung von Polyamiden, bei dem Adipodinitrilhydrierungsprodukte eingesetzt und unaufwendig polymerisiert werden können. Dabei soll eine Stofftrennung nach der Hydrierung entfallen.

Die Aufgabe wird erfindungsgemäß gelöst durch ein Verfahren zur Herstellung von Polyamiden durch
(i) Hydrierung von Adipodinitril zu einem Gemisch aus 6-Aminocapronitril und Hexamethylendiamin im molaren Verhältnis 1:11 bis 99:1, und
(ii) Umsetzung des direkt aus Stufe (i) ohne weitere Reinigungsschritte erhaltenen Hydrierungsgemisches mit Wasser und einer Dicarbonsäure, wobei die Menge an Dicarbonsäure 50 bis 150 Mol-%, bezogen auf die Menge an Mexamethylendiamin im Gemisch, beträgt.

Damit können Polyamide auf der Basis von Aminonitrilen, Adipinsäure und Hexamethylendiamin hergestellt werden.

Es wurde gefunden, daß ein Hydriergemisch aus 6-Aminocapronitril und Hexamethylendiamin in Gegenwart von bifunktionellen Säuren wie Adipinsäure oder Terephthalsäure in mehreren Herstellphasen bzw. Verfahrensschritten, die durch bestimmte Temperaturen und Drücke gekennzeichnet sind, zu Polyamidmischungen umgesetzt werden kann.

Es kann eine vielzahl von Hydriergemischen eingesetzt werden. Erfindungsgemäß beträgt das molare Verhältnis von 6-Aminocapronitril und Hexamethylendiamin im Hydriergemisch 1:99 bis 99:1, bevorzugt 5:95 bis 95:5 und besonders bevorzugt 10:90 bis 90:10. Das Aminocapronitril Hexamethylendiamin-Gemisch erhält man durch Hydrierung von Adipodinitril nach bekannten Verfahren, beispielsweise beschrieben in DE-A 836,938, DE-A 848,654 oder US 5,151,543..

Gewünschtenfalls können der Reaktionsmischung in jeder Reaktionsstufe des erfindungsgemäßen Verfahrens dem Fachmann bekannte Substanzen zur Kettenverlängerung, -verzweigung und -regelung, zum Beispiel mono-, bi- und trifunktionelle Verbindungen, UV- und Wärmestabilisatoren, Pigmente, Verarbeitungshilfsmittel, Flammschutzmittel, Farbstoffe oder Schlagzähmodifier zugesetzt werden, wie sie beispielsweise in der DE-A-197 09 390 beschrieben sind.

Substanzen zur Kettenverlängerung, -verzweigung und -regelung werden bevorzugt vor, während oder nach der ersten Reaktionsstufe der Reaktionsmischung zugesetzt, während Pigmente, Verarbeitungshilfsmittel und Farbstoffe bevorzugt nach den Stufen. die Katalysatorfestbetten enthalten, der Mischung zugesetzt werden.

Erfindungsgemäß kann das Hydriergemisch zusammen mit Wasser und mindestens einer bifunktionellen Säure in verschiedenen Ausführungsformen des Verfahrens zu Polyamid umgesetzt werden. Die erfindungsgemäße Abfolge der im folgenden beschriebenen Stufen erfolgt entweder diskontinuierlich, d.h. in einem Reaktor zeitlich nacheinander, oder kontinuierlich, d.h. in aufeinanderfolgenden Reaktoren. Selbstverständlich ist es auch möglich, einen Teil der Stufen kontinuierlich und die restlichen diskontinuierlich auszuführen.

Ein bevorzugtes Verfahren umfaßt die folgenden Stufen:
(1) Vermischen des Hydrierungsgemisches aus Hexamethylendiamin und Aminocapronitril mit Wasser und einer Dicarbonsäure zu einem Reaktionsgemisch und nachfolgende Umsetzung bei einer Temperatur im Bereich von 90 bis 300°C und einem Druck, bei dem das Reaktionsgemisch einphasig-flüssig vorliegt,
(2) weitere Umsetzung des Umsetzungsgemisches aus Stufe (1) bei einer Temperatur im Bereich von 230 bis 400°C und einem Druck. bei dem eine flüssige und eine gasförmige Phase erhalten werden. Abtrennung der gasförmigen Phase von der flüssigen Phase, und
(3) Nachkondensation des Produktgemisches bei einer Temperatur von 250 bis 310°C und einem Druck, der niedriger ist als der Druck in Stufe (2).

Die Stufen werden nachfolgend detaillierter beschrieben.
(1) Das Hydriergemisch wird vollständig mit einer bifunktionellen Säure, bevorzugt mit Adipinsäure und Wasser vermischt, beispielsweise mit Hilfe von statischen Mischern oder in einem Rührkessel, der gleichzeitig als Vorlagebehälter dienen kann. Der Säuregehalt wird als Funktion der Hexamethylendiaminkonzentration festgelegt und beträgt 50 bis 150 Mol-% und , ' bevorzugt 90 bis 110 Mol-%, bezogen auf die eingesetzte molare Menge an Hexamethylendiamin. Erfindungsgemäß setzt man Wasser in einem Molverhältnis von Aminocapronitril zu Wasser im Bereich von 1:1 bis 1:6, besonders bevorzugt von 1:1 bis 1:4, ganz besonders bevorzugt von 1:1 bis 1:3, ein, wobei der Einsatz von Wasser im Überschuß, bezogen auf das im Hydriergemisch vorhandene Aminocapronitril, bevorzugt ist.
   Die Umsetzung des Reaktionsgemisches erfolgt bei Temperaturen zwischen 90 und 300°C, bevorzugt zwischen 150 und 230°C. Der Druck in dieser Reaktionsstufe wird bevorzugt so gewählt, daß das Gemisch einphasig-flüssig vorliegt. Als Reaktor kann zum Beispiel ein Strömungsrohr eingesetzt werden. Die Verweildauer in dieser Reaktionsstufe beträgt bis zu 10 Stunden, bevorzugt zwischen 0,1 und 3 Stunden und besonders bevorzugt zwischen 0,1 und 1 Stunde.
(2) Weitere Umsetzung des Umsetzungsgemisches aus Stufe 1 bei einer Temperatur zwischen 230 und 400°C, bevorzugt zwischen 250 und 280°C, wobei der Druck so gewählt wird, daß eine flüssige und eine gasförmige Phase erhalten werden und die gasförmige Phase von der flüssigen Phase abgetrennt werden kann. Die Verweildauer in dieser Reaktionsstufe hängt vom Wassergehalt der Mischung, von der Reaktionstemperatur und dem Reaktordruck sowie vom gewünschten Polymerisationsgrad des Produktes am Ende der Reaktionszeit ab. Sie beträgt bis zu 10 Stunden, bevorzugt zwischen 0,1 und 5 Stunden und besonders bevorzugt zwischen 0,1 und 3 Stunden.
   Die Abtrennung der Gasphase kann durch den Einsatz von gerührten oder ungerührten Abscheidekesseln oder Kesselkaskaden sowie durch den Einsatz von Verdampferapparaten erfolgen, z.B. durch Umlaufverdampfer oder Dünnschichtverdampfer, wie durch Filmextruder oder durch Ringscheibenreaktoren, die eine vergrößerte Phasengrenzfläche garantieren. Gegebenenfalls ist ein Umpumpen der Reaktionsmischung bzw. der Einsatz eines Schlaufenreaktors notwendig, um die Phasengrenzfläche zu vergrößern. Des weiteren kann die Abtrennung der Gasphase durch die Zugabe von Wasserdampf oder Inertgas in die flüssige Phase gefördert werden.
   Ist der Polymerisationsgrad ausreichend, so kann die erhaltene Polymerschmelze aus der zweiten Stufe beispielsweise mit Hilfe einer Zahnradpumpe ausgetragen, in einem Wasserbad abgekühlt und in anschließenden, dem Fachmann bekannten Verfahrensschritten, zum Beispiel durch Extrusion, Extraktion, Pigmentierung, Temperung weiterverarbeitet werden.
   In einer möglichen Ausführungsform der zweiten Verfahrensstufe entspricht der Druck dem Gleichgewichtsdampfdruck von Wasser bei der vorgewählten Temperatur, so daß eine Wasserabscheidung aus der Reaktionsmischung über einen endlichen Zeitraum von beispielsweise 100 Minuten möglich ist. Für hohe Polymerisationsgrade bzw. Produktviskositäten ist dann allerdings eine weitere, dritte Stufe erforderlich, die bei geringen Drücken eine effektive Kondensation der Reaktionsmischung ermöglicht.
(3) Die Abtrennung des bei der Kondensation entstehenden Wassers erfolgt in der dritten Stufe analog zur zweiten Stufe durch den Einsatz von gerührten oder ungerührten Abscheidekesseln oder Kesselkaskaden sowie durch den Einsatz von Verdampferapparaten, z.B. durch Umlaufverdampfer oder Dünnschichtverdampfer, wie durch Filmextruder oder durch Ringscheibenreaktoren, die eine vergrößerte Phasengrenzfläche garantieren. Gegebenenfalls ist ein Umpumpen der Reaktionsmischung bzw. der Einsatz eines Schlaufenreaktors notwendig, um die Phasengrenzfläche zu vergrößern. Des weiteren kann die Wasserabscheidung durch die Zugabe von Inertgas in die flüssige und die gasförmige Phase gefördert werden. Die Reaktionstemperaturen werden bevorzugt im Bereich zwischen 250 und 310°C, besonders bevorzugt zwischen 270 und 290°C, und der Reaktionsdruck vorzugsweise kleiner als 2 bar eingestellt.

Im vorstehend beschriebenen Verfahren können die folgenden Stufen vorangestellt werden:
(a) vermischen des Hydrierungsgemisches aus Hexamethylendiamin und Aminocapronitril mit Wasser und nachfolgende Umsetzung bei einer Temperatur im Bereich von 90 bis 400°C und einem Druck im Bereich von 0,1 bis 15 x 10⁶ Pa,
(b) weitere Umsetzung des Umsetzungsgemisches aus Stufe (a) bei einer Temperatur im Bereich von 200 bis 350°C und einem Druck, der niedriger ist als der Druck in Stufe (a) und so eingestellt wird, daß eine flüssige und eine gasförmige Phase erhalten werden, Abtrennung der gasförmigen von der flüssigen Phase.
(c) Vermischen des erhaltenen Umsetzungsgemisches mit einer Dicarbonsäure zu einem Reaktionsgemisch und nachfolgende Umsetzung des Reaklionsgemisches analog der Stufen (1), (2) und (3), wie sie vorstehend beschrieben sind.

In dieser anderen bevorzugten Ausführungsform des Verfahrens wird das Aminocapronitril-Hexamethylendiamin-Hydriergemisch in einer oder zwei Verfahrensvorstufe(n) mit Wasser, jedoch ohne Zusatz der bifunktionellen Säure umgesetzt, das entstandene Produktgemisch anschließend mit den gewünschten Säuren, bevorzugt mit Adipinsäure, vereinigt und in den vorstehend beschriebenen Verfahrensstufen (1) - (3) polymerisiert:

### 1. Vorstufe (a)

In der ersten Vorstufe wird das Hydriergemisch mit Wasser bei einer Temperatur von 90 bis 400°C, vorzugsweise von 180 bis 310°C und insbesondere von 220 bis 270°C erhitzt, wobei ein Druck von 0,1 bis 15 x 10⁶ Pa, vorzugsweise 1 bis 10 x 10⁶ Pa und insbesondere 4 bis 9 x 10⁶ Pa eingestellt wird.

Erfindungsgemäß setzt man Wasser in einem Molverhältnis von Aminocapronitril zu Wasser im Bereich von 1:1 bis 1:6, besonders bevorzugt von 1:1 bis 1:4, ganz besonders bevorzugt von 1:1 bis 1:3 ein, wobei der Einsatz von Wasser im Überschuß, bezogen auf das eingesetzte Aminocapronitril, bevorzugt ist.

Bevorzugt werden Druck und Temperatur so aufeinander abgestimmt, daß das Reaktionsgemisch einphasig-flüssig vorliegt. Bei dieser einphasigen Fahrweise ist die bevorzugte Ausführungsform ein Strömungsrohr, gewünschtenfalls gefüllt mit dem weiter unten beschriebenen Katalysatormaterial.

In einer alternativen Ausführungsform dieser Stufe können Druck und Temperatur auch so aufeinander abgestimmt werden, daß eine flüssige Phase und eine gasförmige Phase erhalten werden. Bei dieser Ausführungsform entspricht die flüssige Phase dem Umsetzungsgemisch, während die gasförmige Phase abgetrennt wird. Die gasförmige Phase, die im wesentlichen aus Ammoniak und Wasserdampf besteht, entfernt man im allgemeinen kontinuierlich mit Hilfe einer Destillationsvorrichtung. Die bei dieser Destillation ggf. mit abgeschiedenen organischen Bestandteile des Destillats, im überwiegendem Maße nicht umgesetztes Aminonitril und Hexamethylendiamin, können in die erste Vorstufe und/oder in die nachfolgenden Stufen vollständig oder teilweise zurückgeführt werden.

Bevorzugt wird bei der zweiphasigen Fahrweise ein Druck gewählt, der größer ist als der zur Massetemperatur der Reaktionsmischung gehörende Dampfdruck von reinem Wasser und Hexamethylendiamin, jedoch kleiner als der Gleichgewichtsdampfdruck von Ammoniak.

In einer besonders bevorzugten Ausführungsform der zweiphasigen Fahrweise wird ein senkrecht stehendes Strömungsrohr eingesetzt, das von unten nach oben durchströmt wird und gewünschtenfalls oberhalb des Produktausgangs eine weitere Öffnung zur Gasphasenabtrennung aufweist. Dieser Rohrreaktor kann vollständig oder teilweise mit Katalysatormaterial, insbesondere -granulat gefüllt sein. In einer bevorzugten Ausführungsform ist der senkrecht stehende Reaktor bei zweiphasiger Fahrweise maximal bis zur Phasengrenze mit Katalysatormaterial gefüllt.

Erfindungsgemäß wird das Aminocapronitril-Hexamethylendiamin-Wasser-Gemisch vor der Einführung in die erste Stufe mit Hilfe eines Wärmetauschers erhitzt. Selbstverständlich können das Aminocapronitril-Hexamethylendiamin-Hydriergemisch und das Wasser auch getrennt voneinander erhitzt und in der ersten Stufe durch den Einsatz von Mischelementen vermischt werden.

Die Verweilzeit des Reaktionsgemisches sollte im allgemeinen so eingestellt werden. daß sie 10 Minuten bis 10 Stunden. vorzugsweise zwischen 30 Minuten und 6 Stunden beträgt. Eine Beschränkung der Verweilzeit gibt es nicht.

### 2. Vorstufe (b)

Die zweite Vorstufe wird vorzugsweise dann eingesetzt, wenn das Reaktionsgemisch in der ersten Vorstufe einphasig-flüssig vorliegt. Erfindungsgemäß wird dann das in der ersten Vorstufe erhaltene Umsetzungsgemisch in Vorstufe 2 bei einer Temperatur von 200 bis 350°C, vorzugsweise bei einer Temperatur im Bereich von 210 bis 300°C und insbesondere im Bereich von 230 bis 270°C und einem Druck, der niedriger ist als der Druck in Stufe 1, weiter umgesetzt. Vorzugsweise ist der Druck in der zweiten Stufe mindestens 0,5 x 10⁶ Pa niedriger als der Druck in Stufe 1, wobei im allgemeinen der Druck im Bereich von 0,1 bis 45 x 10⁶ Pa, vorzugsweise 0,5 bis 15 x 10⁶ Pa und insbesondere 2 bis 6 x 10⁶ Pa liegt.

Dabei werden in Stufe 2 die Temperatur und der Druck so gewählt, daß eine Gasphase und eine flüssige Phase erhalten werden und die Gasphase von der flüssigen Phase abgetrennt werden kann.

Die Abtrennung der Gasphase kann durch den Einsatz von gerührten oder ungerührten Abscheidekesseln oder Kesselkaskaden sowie durch den Einsatz von Verdampferapparaten erfolgen, z.B. durch Umlaufverdampfer oder Dünnschichtverdampfer, wie durch Filmextruder oder durch Ringscheibenreaktoren, die eine vergrößerte Phasengrenzfläche garantieren. Gegebenenfalls sind ein Umpumpen der Reaktionsmischung bzw. der Einsatz eines Schlaufenreaktors notwendig, um die Phasengrenzfläche zu vergrößern. Des weiteren kann die Abtrennung der Gasphase durch die Zugabe von Wasserdampf oder Inertgas in die flüssige Phase gefördert werden.

Bevorzugt wird bei einer vorgewählten Temperatur der Druck so eingestellt, daß er kleiner ist als der Gleichgewichtsdampfdruck von Ammoniak, jedoch größer als der Gleichgewichtsdampfdruck der übrigen Komponenten im Reaktionsgemisch bei der vorgegebenen Temperatur. Auf diese Weise kann insbesondere die Abscheidung von Ammoniak begünstigt und somit die Hydrolyse der Säureamidgruppen beschleunigt werden.

Die bevorzugte Verweilzeit des Umsetzungsgemisches in Stufe 2 sollte 10 Minuten bis 5 Stunden, vorzugsweise 30 Minuten bis 3 Stunden betragen. Eine Beschränkung der Verweilzeit gibt es dabei nicht.

Die Produktleitung zwischen der ersten und zweiten Vorstufe enthält ggf. Füllkörper, wie Raschig-Ringe oder Sulzer-Mischelemente, die eine kontrollierte Entspannung des Umsetzungsgemisches in die Gasphase ermöglichen. Dies trifft insbesondere auf die einphasige Betriebsweise der ersten Verfahrensstufe zu.

Die zur weiteren Umsetzung erfindungsgemäß einzusetzenden bifunktionellen Säuren wie Adipinsäure oder Terephthalsäure werden vor den folgenden Verfahrensstufen (s.o.) mit dem Umsetzungsgemisch aus den Vorstufen vermischt. Hierzu können beispielsweise statische oder dynamische Mischer eingesetzt werden. welche den Produktstrom aus der Vorstufe mit einer wässrigen Adipinsäure- oder Terephthalsäurelösung vermischen. Gewünschlenfalls kann die Säure auch direkt in die zweite Vorstufe, die Misch- bzw. Rührelemente aufweisen sollte, dosiert werden.

Die Umsetzung kann in einer oder mehrerer der Stufen in Gegenwart eines Metalloxid-Festbettkatalysators durchgeführt werden:

Festbettkatalysatoren werden vorzugsweise in den Reaktoren der ersten Vorstufe und der Stufe (1) eingesetzt. Gewünschtenfalls können diese aber auch in den übrigen Verfahrensstufen zum Einsatz kommen. Die mit Katalysator gefüllten Reaktoren werden bevorzugt einphasig-flüssig betrieben.

Erfindungsgemäß bevorzugt werden Brönsted-Säurekatalysatoren, ausgewählt aus einem Beta-Zeolith-, Schichtsilikat-, Aluminiumoxid- oder einem Titandioxid-Katalysator. Es können auch Mischungen dieser Katalysatoren Verwendung finden. Die Titandioxid-Katalysatoren bestehen bevorzugt aus 70 bis 100 Gew.-% Anatas und 0-30 Gew.-% Rutil, in dem bis zu 40 Gew.-% des Titandioxids durch Wolframoxid ersetzt sein können. Wird ein sehr reines Aminocapronitril eingesetzt, so sollte der Anteil an Anatas im Titandioxid-Katalysator möglichst hoch sein. Vorzugsweise wird ein reiner Anatas-Katalysator eingesetzt. Enthält das eingesetzte Aminocapronitril Verunreinigungen, beispielsweise 1 bis 3 Gew.-% an Verunreinigungen, so wird vorzugsweise ein Titandioxid-Katalysator eingesetzt, der ein Gemisch aus Anatas und Rutil enthält. Vorzugsweise beträgt der Anteil an Anatas 70 bis 80 Gew.-% und der Anteil an Rutil 20 bis 30 Gew.-%. Besonders bevorzugt wird in diesem Fall ein Titandioxid-Katalysator aus etwa 70 Gew.-% Anatas und etwa 30 Gew.-% Rutil eingesetzt. Der Katalysator weist vorzugsweise ein Porenvolumen von 0,1 bis 5 ml/g, besonders bevorzugt 0.2 bis 0,5 ml/g auf. Der mittlere Porendurchmesser beträgt vorzugsweise 0,005 bis 0,1 mm, besonders bevorzugt 0,01 bis 0,06 mm. Wird mit hochviskosen Produkten gearbeitet, sollte der mittlere Porendurchmesser groß gewählt werden. Die Schneidhärte ist vorzusgweise größer 20 N, besonders bevorzugt > 25 N. Die BET-Oberfläche beträgt vorzugsweise mehr als 40 m²/g, besonders bevorzugt mehr als 100 m²/g. Bei einer kleiner gewählten BET-Oberfläche sollte das Schüttvolumen entsprechend höher gewählt werden, um eine ausreichende Katalysatoraktivität zu gewährleisten. Besonders bevorzugte Katalysatoren weisen folgende Eigenschaften auf: 100% Anatas; 0,3 ml/g Porenvolumen; 0,02 mm mittlerer Porendurchmesser; 32 N Schneidhärte; 116 m²/g BET-Oberfläche; oder 84 Gew.-% Anatas; 16 Gew.-% Rutil; 0,3 ml/g Porenvolumen; 0,03 mm mittlerer Porendurchmesser; 26 N Schneidhärte; 46 m²/g BET-Oberfläche. Die Katalysatoren können dabei aus handelsüblichen Pulvern, wie sie beispielsweise von Degussa, Finnti oder Kemira angeboten werden, hergestellt werden. Beim Einsatz eines Anteils an Wolframoxid werden bis zu 40 Gew.-%, vorzugsweise bis zu 30 Gew-%, besonders bevorzugt 15 bis 25 Gew.-% des Titandioxids durch Wolframoxid ersetzt. Die Konfektionierung der Katalysatoren kann wie in Ertl, Knözinger, Weitkamp: "Handbook of heterogeous catalysis", VCH Weinheim, 1997, Seiten 98 ff beschrieben erfolgen. Der Katalysator kann in jeder beliebigen geeigneten Form eingesetzt werden.

Ein anderer bevorzugter Katalysator enthält neben Titandioxid (beispielsweise Typ VKR 611) etwa 9% Ton, 0,8% Aluminiumoxid sowie etwa 4% Phosphoroxid. Der in 4 mm-Strängen formulierte und calcinierte Katalysator dieser Zusammensetzung ist 100% wasserfest und besitzt eine Schneidhärte von >53 N.

Vorzugsweise werden die Katalysatoren in Form von Formkörpern, Strängen oder Granulat, insbesondere von Granulat eingesetzt. Das Granulat ist dabei vorzugsweise so groß, daß es vom Produktgemisch gut abtrennbar ist und bei der Umsetzung die Fließfähigkeit des Produkts nicht beeinträchtigt. Durch die Granulatform des Katalysators ist es möglich, ihn am Austrag der ersten Stufe mechanisch abzutrennen. Beispielsweise werden dazu mechanische Filter oder Siebe am Austrag der Verfahrensstufen, die den Katalysator enthalten, vorgesehen.

Die Erfindung wird durch die nachstehenden Beispiele näher erläutert:

### Beispiele

### Analytik

Die sogenannte relative Viskosität (RV) als Maß für den Molekulargewichtsaufbau und Polymerisationsgrad wird in 1 Gew.-%iger Lösung bei extrahiertem Material und in 1.1 Gew.-%iger Lösung bei unextrahiertem Polymer in 96%iger Schwefelsäure bei 25°C mittels Viskosimeter nach Ubbelohde bestimmt. Unextrahierte Polymere werden vor der Analyse 20 Stunden im Vakuum getrocknet.

Zur Extraktion werden 100 Gew.-Teile Polycaprolactam mit 400 Gew.-Teilen vollentsalztem Wasser von 100°C für eine Dauer von 32 Stunden unter Rückfluß gerührt bzw. extrahiert und nach Entfernen des Wassers milde, das heißt ohne die Gefahr einer Nachkondensation, bei ein Temperatur von 100°C für eine Zeitdauer von 20 Stunden im Vakuum getrocknet.

### Verfahrensführung

Die Verfahrensbeispiele wurden in einem gerührten 1 Liter-Autoklaven durchgeführt. Die Verfahrensweisen der Beispiele 6 bis 10 zeichnen sich dadurch aus, daß dem Reaktionsgemisch durch den Reaktoraustrag innerhalb eines definierten Zeitintervalls kontinuierlich Wasser zugeführt wird.

Die Zusammensetzung der Eduktreaktionsmischungen und die relativen Viskositäten der nach den jeweiligen Verfahrensweisen hergestellten Produkte sind tabellarisch aufgelistet, wobei
HMD: Hexamethylendiamin
ACN: Aminocapronitril
ADS: Adipinsäure
bedeuten.

### Beispiel 1

Nach dem Einfüllen der Reaktanden wird der Autoklav verschlossen, entlüftet und mehrmals mit Stickstoff gespült. Das Gemisch wird dann im geschlossenen Reaktor 2 Stunden einer Reaktionstemperatur von 215°C ausgesetzt. Anschließend wird die Reaktionstemperatur auf 280°C erhöht und der Reaktor mit Hilfe eines Regelventils so weit geöffnet, daß sich ein Innendruck von 18 bar einstellt. Nach einer Reaktionsdauer von 1 Stunde wird der Druck im Autoklaven innerhalb von 30 Minuten auf den Umgebungsdruck von ca. 1 bar abgesenkt. Die Polymerschmelze wird dann für eine Dauer von 60 Minuten bei einer Temperatur von 280°C nachkondensiert und anschließend in ein Wasserbad strangförmig ausgefahren. granuliert und getrocknet.

### Beispiel 2

Nach dem Einfüllen der Reaktanden wird der Autoklav verschlossen, entlüftet und mehrmals mit Stickstoff gespült. Das Gemisch wird dann im geschlossenen Reaktor 2 Stunden einer Reaktionstemperatur von 270°C ausgesetzt. Anschließend wird die Reaktionstemperatur auf 280°C erhöht und der Reaktor mit Hilfe eines Regelventils so weit geöffnet, daß sich ein Innendruck von 18 bar einstellt. Nach einer Reaktionsdauer von 1 Stunde wird der Druck im Autoklaven innerhalb von 30 Minuten auf ca. 5 bar und anschließend innerhalb von 1 Stunde auf ca. 1 bar abgesenkt. Die Polymerschmelze wird dann für eine Dauer von 45 Minuten bei einer Temperatur von 280°C nachkondensiert und
anschließend in ein Wasserbad strangförmig ausgefahren, granuliert und getrocknet.

### Beispiel 3

Nach dem Einfüllen der Reaktanden wird der Autoklav verschlossen, entlüftet und mehrmals mit Stickstoff gespült. Das Gemisch wird dann im geschlossenen Reaktor 2 Stunden einer Reaktionstemperatur von 215°C ausgesetzt. Anschließend wird die Reaktionstemperatur auf 280°C erhöht und der Reaktor mit Hilfe eines Regelventils so weit geöffnet, daß sich ein Innendruck von 18 bar einstellt. Nach einer Reaktionsdauer von 1 Stunde wird der Druck im Autoklaven innerhalb von 30 Minuten auf ca. 5 bar und anschließend innerhalb von 1 Stunde auf ca 1 bar abgesenkt. Die Polymerschmelze wird dann für eine Dauer von 20 Minuten bei einer Temperatur von 280°C nachkondensiert und anschließend in ein Wasserbad strangförmig ausgefahren, granuliert und getrocknet.

### Beispiel 4

Nach dem Einfüllen der Reaktanden wird der Autoklav verschlossen, entlüftet und mehrmals mit Stickstoff gespült. Das Gemisch wird dann im geschlossenen Reaktor 2 Stunden einer Reaktionstemperatur von 215°C ausgesetzt. Anschließend wird die Reaktionstemperatur auf 280°C erhöht und der Reaktor mit Hilfe eines Regelventils so weit geöffnet, daß sich ein Innendruck von 18 bar einstellt. Nach einer Reaktionsdauer von 1 Stunde wird der Druck im Autoklaven innerhalb von 30 Minuten auf ca. 5 bar und anschließend innerhalb von 1 Stunde auf ca 1 bar 5 abgesenkt. Die Polymerschmelze wird dann für eine Dauer von 50 Minuten bei einer Temperatur von 280°C nachkondensiert und anschließend in ein Wasserbad strangförmig ausgefahren, granuliert und getrocknet.

### Beispiel 5

Nach dem Einfüllen der Reaktanden wird der Autoklav verschlossen, entlüftet und mehrmals mit Stickstoff gespült und dann erhitzt. Nach Erreichen der Reaktionstemperatur von 280°C wird der Reaktor mit Hilfe eines Regelventils so weit geöffnet, daß sich ein Innendruck von 18 bar einstellt. Nach einer Reaktionsdauer von 1 Stunde wird der Druck im Autoklaven innerhalb 30 Minuten auf ca. 5 bar und anschließend innerhalb von 1 Stunde auf ca. 1 bar abgesenkt. Die Polymerschmelze wird dann für eine Dauer von 15 Minuten bei einer Temperatur von 280°C nachkondensiert und anschließend in ein Wasserbad strangförmig ausgefahren, granuliert und getrocknet.

**Tabelle 1:**

| **Beispiel** | **Zusammensetzung** | **Relative Viskosität** |
|---|---|---|
| 1 | 150 g Wasser | 2,47 |
| | 84 g ADS | |
| | 66 g HMD | |
| | 150 g ACN | |
| 2 | 150 g Wasser | 2,15 |
| | 84 g ADS | |
| | 66 g HMD | |
| | 150 g ACN | |
| 3 | 150 g Wasser | 2,42 |
| | 134 g ADS | |
| | 106 g HMD | |
| | 60 g ACN | |
| 4 | 150 g Wasser | 1,88 |
| | 33 g ADS | |
| | 27 g HMD | |
| | 240 g ACN | |
| 5 | 150 g Wasser | 1,88 |
| | 84 g ADS | |
| | 66 g HMD | |
| | 150 g ACN | |

### Beispiel 6

Nach dem Einfüllen der Reaktanden wird der Autoklav verschlossen, entlüftet und mehrmals mit Stickstoff gespült. Das Reaktionsgemisch wird dann im geschlossenen Reaktor 1 Stunde einer Reaktionstemperatur von 270°C ausgesetzt. Nachdem der Reaktorinnendruck durch Öffnen eines Regelventils innerhalb von 30 Minuten auf 30 bar eingestellt worden ist, erfolgt die sogenannte Wasser-Stripping-Phase: Eine Kolbenpumpe dosiert Wasser mit einem Durchsatz von 60g/h in das Reaktionsgemisch. Nach 2 Stunden wird das Wasser-Strippen beendet und der Druck im Autoklaven innerhalb von 1 Stunde auf 1 bar abgesenkt. Die Polymerschmelze wird dann zwei weitere Stunden bei 270°C umgesetzt bzw. nachkondensiert und anschließend strangförmig ausgefahren, granuliert und getrocknet.

### Beispiele 7 bis 9

Nach dem Einfüllen der Reaktanden wird der Autoklav verschlossen, entlüftet und mehrmals mit Stickstoff gespült. Das Reaktionsgemisch wird dann im geschlossenen Reaktor 1 Stunde einer Reaktionstemperatur von 270°C ausgesetzt. Nachdem der Reaktorinnendruck durch Öffnen eines Regelventils innerhalb von 30 Minuten auf 30 bar eingestellt worden ist, erfolgt die sogenannte Wasser-Stripping-Phase : Eine Kolbenpumpe dosiert Wasser mit einem Durchsatz von 60g/h in das Reaktionsgemisch. Nach 2 Stunden wird das Wasser-Strippen beendet und der Druck im Autoklaven innerhalb von 1 Stunde auf 1 bar abgesenkt. Die Polymerschmelze wird dann eine weitere Stunde bei 270°C umgesetzt bzw. nachkondensiert und anschließend strangförmig ausgefahren, granuliert und getrocknet.

### Beispiel 10

Nach dem Einfüllen der Reaktanden wird der Autoklav verschlossen, entlüftet und mehrmals mit Stickstoff gespült. Das Reaktionsgemisch wird dann im geschlossenen Reaktor aufgeheizt. Sofort nach Erreichen einer Produkttemperatur von 270°C wird der Reaktorinnendruck durch Öffnen eines Regelventils innerhalb von 30 Minuten auf 30 bar eingestellt. Anschließend erfolgt die sogenannte Wasser-Stripping-Phase: Eine Kolbenpumpe dosiert Wasser mit einem Durchsatz von 60g/h in das Reaktionsgemisch. Nach 2 Stunden wird das Wasser-Strippen beendet und der Druck im Autoklaven innerhalb von 1 Stunde auf 1 bar 5 abgesenkt. Die Polymerschmelze wird dann eine weitere Stunde bei 270°C umgesetzt bzw. nachkondensiert und anschließend strangförmig ausgefahren, granuliert und getrocknet.

**Tabelle 2**

| **Beispiel** | **Zusammensetzung** | **Realtive Viskosität** |
|---|---|---|
| 6 | 150 g H₂O | 2,61 |
| | 33 g ADS | |
| | 27 g HMD | |
| | 240 g ACN | |
| 7 | 150 g H₂O | 3,60 |
| | 134 g ADS | |
| | 106 g HMD | |
| | 60 g ACN | |
| 8 | 150 g H₂O | 2,98 |
| | 117 g ADS | |
| | 93 g HMD | |
| | 90 g ACN | |
| 9 | 150 g H₂O | 3,73 |
| | 150 g ADS | |
| | 120 g HMD | |
| | 30 g ACN | |
| 10 | 150 g H₂O | 3,52 |
| | 134 g ADS | |
| | 106 g HMD | |
| | 60 g ACN | |

## Patentansprüche

1. Verfahren zur Herstellung von Polyamiden durch
(i) Hydrierung von Adipodinitril zu einem Gemisch aus 6-Aminocapronitril und Hexamethylendiamin im molaren Verhältnis 1:99 bis 99:1, und
(ii) Umsetzung des direkt aus Stufe (i) ohne weitere Reinigungsschritte erhaltenen Hydrierungsgemisches mit Wasser und einer Dicarbonsäure, wobei die Menge an Dicarbonsäure 50 bis 150 Mol-%, bezogen auf die Menge an Hexamethylendiamin im Gemisch, beträgt.

2. Verfahren nach Anspruch 1, **dadurch gekennzeichnet, daß** als Dicarbonsäure Adipinsäure oder Terephthalsäure eingesetzt wird.

3. Verfahren nach einem der Ansprüche 1 oder 2, **dadurch gekennzeichnet, daß** das Wasser in einem Molverhältnis von 1:1 bis 6:1, bezogen auf das Aminocapronitril, eingesetzt wird.

4. Verfahren nach einem der Ansprüche 1 bis 3, umfassend die folgenden Stufen:
(1) Vermischen des Hydrierungsgemisches aus Hexamethylendiamin und Aminocapronitril mit Wasser und einer Dicarbonsäure zu einem Reaktionsgemisch und nachfolgende Umsetzung bei einer Temperatur im Bereich von 90 bis 300°C und einem Druck, bei dem das Reaktionsgemisch einphasig-flüssig vorliegt,
(2) weitere Umsetzung des Umsetzungsgemisches aus Stufe (1) bei einer Temperatur im Bereich von 230 bis 400°C und einem Druck, bei dem eine flüssige und eine gasförmige Phase erhalten werden, Abtrennung der gasförmigen Phase von der flüssigen Phase, und
(3) Nachkondensation des Produktgemisches bei einer Temperatur von 250 bis 310°C und einem Druck, der niedriger ist als der Druck in Stufe (2).

5. Verfahren nach einem der Ansprüche 1 bis 4, umfassend die folgenden Stufen:
(a) Vermischen des Hydrierungsgemisches aus Hexamethylendiamin und Aminocapronitril mit Wasser und nachfolgende Umsetzung bei einer Temperatur im Bereich von 90 bis 400°C und einem Druck im Bereich von 0,1 bis 15 x 10⁶ Pa,
(b) weitere Umsetzung des Umsetzungsgemisches aus Stufe (a) bei einer Temperatur im Bereich von 200 bis 350°C und einem Druck, der niedriger ist als der Druck in Stufe (a), und so eingestellt wird, daß eine flüssige und eine gasförmige Phase erhalten werden, Abtrennung der gasförmigen von der flüssigen Phase,
(c) Vermischen des erhaltenen Umsetzungsgemisches mit einer Dicarbonsäure zu einem Reaktionsgemisch und nachfolgende Umsetzung des Reaktionsgemisches analog den Stufen (1), (2) und (3) gemäß Anspruch 4.

6. Verfahren nach einem der Ansprüche 1 bis 5, **dadurch gekennzeichnet, daß** die Umsetzung in einer oder mehreren der Stufen in Gegenwart eines Metalloxid-Festbettkatalysators durchgeführt wird.

7. Verfahren nach Anspruch 6, **dadurch gekennzeichnet, daß** der Katalysator ausgewählt ist aus beta-Zeolith-, Schichtsilikat-, Aluminiumoxid- oder Titandioxidkatalysatoren.

## Claims

1. Any process for producing polyamides by
(i) hydrogenating adiponitrile to form a mixture of 6-aminocapronitrile and hexamethylenediamine in a molar ratio of from 1:99 to 99:1, and
(ii) reacting the hydrogenation mixture obtained directly from stage (i) without further purification steps with water and a dicarboxylic acid, the amount of dicarboxylic acid being from 50 to 150 mol%, based on the amount of hexamethylenediamine in the mixture.

2. A process as claimed in claim 1, **characterized in that** the dicarboxylic acid used is adipic acid or terephthalic acid.

3. A process as claimed in either of claims 1 and 2, **characterized in that** the water is used in a molar ratio of from 1:1 to 6:1, based on the aminocapronitrile.

4. A process as claimed in any of claims 1 to 3, comprising the steps of:
(1) mixing of the hydrogenation mixture of hexamethylenediamine and aminocapronitrile with water and a dicarboxylic acid to form a reaction mixture and subsequent conversion at a temperature in the range from 90 to 300°C and a pressure at which the reaction mixture constitutes a single liquid phase,
(2) further conversion of the conversion mixture of step (1) at a temperature in the range from 230 to 400°C and a pressure at which a liquid and a gaseous phase are obtained, separation of the gaseous phase from the liquid phase, and
(3) postcondensation of the product mixture at a temperature of from 250 to 310°C and a pressure which is lower than the pressure in step (2).

5. A process as claimed in any of claims 1 to 4, comprising the steps of:
(a) mixing of the hydrogenation mixture of hexamethylenediamine and aminocapronitrile with water and subsequent conversion at a temperature in the range from 90 to 400°C and a pressure in the range from 0.1 to 15 × 10⁶ Pa,
(b) further conversion of the conversion mixture of step (a) at a temperature in the range from 200 to 350°C and a pressure which is lower than the pressure in step (a) and is adjusted so as to obtain a liquid and a gaseous phase, separation of the gaseous phase from the liquid phase,
(c) mixing of the resulting conversion mixture with a dicarboxylic acid to form a reaction mixture and subsequent conversion of the reaction mixture similarly to steps (1), (2) and (3) of claim 4.

6. A process as claimed in any of claims 1 to 5, **characterized in that** the conversion is carried out in the presence of a metal oxide fixed bed catalyst in one or more of the steps.

7. A process as claimed in claim 6, **characterized in that** the catalyst is selected from beta-zeolite, sheet-silicate, aluminum oxide or titanium dioxide catalysts.

## Revendications

1. Procédé pour la fabrication de polyamides par
(i) Hydrogénation d'adipodinitrile en un mélange constitué de 6-aminoapronitrile et d'hexaméthylène-diamine dans un rapport molaire de 1:99 à 99:1 et
(ii) Transformation du mélange d'hydrogénation obtenu directement au stade (i), sans autres étapes d'épuration, avec de l'eau et de l'acide dicarboxylique, la quantité d'acide bicarbonique étant de 50 à 150 % de moles par rapport à la quantité d'hexaméthylène-diamine dans le mélange.

2. Procédé selon la revendication 1, **caractérisé en ce que** de l'acide adipique ou de l'acide téréphtalique est utilisé comme acide dicarboxylique.

3. Procédé selon l'une des revendications 1 ou 2, **caractérisé en ce que** l'eau est utilisée dans un rapport molaire de 1:1 à 6:1 par rapport à l'aminocapronitrile.

4. Procédé selon l'une des revendications 1 à 3, comprenant les phases suivantes :
(1) Mélange du mélange d'hydrogénation, constitué d'hexaméthylène-diamine et d'aminocapronitrile, avec de l'eau et un acide dicarboxylique en un mélange réactionnel et ensuite transformation à une température dans la plage de 90 à 300°C et à une pression à laquelle le mélange réactionnel est à phase unique liquide,
(2) autre transformation du mélange de transformation obtenu au stade (1) à une température dans la plage de 230 à 400°C et à une pression à laquelle une phase liquide et une phase gazeuse sont obtenues, séparation de la phase gazeuse de la phase liquide, et
(3) condensation finale du mélange de produit à une température de 250 à 310°C et à une pression qui est plus basse que la pression au stade (2).

5. Procédé selon l'une des revendications 1 à 4, comprenant les stades suivants :
(a) Mélange du mélange d'hydrogénation, constitué d'hexaméthylène-diamine et d'aminocapronitrile avec de l'eau et ensuite transformation à une température dans la plage de 90 à 400°C et à une pression dans la plage de 0,1 à 15 x 10⁶ Pa,
(b) autre transformation du mélange de transformation obtenu au stade (a) à une température dans la plage de 200 à 350°C et à une pression qui est plus basse que la pression au stade (a) et est ajustée de façon qu'une phase liquide et une phase gazeuse soient obtenues, séparation de la phase gazeuse de la phase liquide,
(c) Mélange du mélange de transformation obtenu, avec un acide dicarboxylique, en un mélange réactionnel et ensuite transformation du mélange réactionnel de façon analogue aux stades (1), (2) et (3) selon la revendication 4.

6. Procédé selon l'une des revendications 1 à 5, **caractérisé en ce que** la transformation est réalisée en un ou plusieurs des stades en présence d'un catalyseur à lit fixe constitué d'oxyde métallique.

7. Procédé selon la revendication 6, **caractérisé en ce que** le catalyseur est choisi parmi les catalyseurs en bêta-zéolite, silicate en couches, oxyde d'aluminium ou dioxyde de titane.
